# EUROPÄISCHE PATENTSCHRIFT

(11) **EP 2 960 965 B1**
(45) Veröffentlichungstag und Bekanntmachung des Hinweises auf die Patenterteilung: **18.07.2018**
(21) Anmeldenummer: 15001200.3
(22) Anmeldetag: 22.04.2015
(51) Int. Cl.: H01M 2/10, H01M 10/48

(54) **KRAFTFAHRZEUGBATTERIE MIT EINEM GEHÄUSEDECKEL DER EINE EINBRINGEINRICHTUNG FÜR EINEN TEMPERATURSENSOR AUFWEIST**
MOTOR VEHICLE BATTERY WITH A COVER COMPRISING AN INTRODUCTION MEANS FOR A TEMPERATURE DETECTOR
BATTERIE DE VÉHICULE AUTOMOBILE AVEC COUVERCLE COMPRENANT UN MOYEN D' INTRODUCTION D' UN DÉTECTEUR DE TEMPÉRATURE

(30) Priorität: 06.06.2014 DE 102014008428
(43) Veröffentlichungstag der Anmeldung: 30.12.2015
(73) Patentinhaber: MAN Truck & Bus AG, 80995 München (DE)
(72) Erfinder: Braun, Reimar, 81735 München (DE)
(74) Vertreter: v. Bezold & Partner Patentanwälte - PartG mbB

(56) Entgegenhaltungen:
- EP-A1- 2 849 252
- US-A1- 2013 078 487
- US-A1- 2013 266 833

## Beschreibung

Die Erfindung betrifft eine Kraftfahrzeugbatterie nach dem Oberbegriff des Anspruchs 1 sowie ein Nutzfahrzeug, z. B. einen Omnibus oder einen Lastkraftwagen, der mit wenigstens einer solchen Kraftfahrzeugbatterie ausgerüstet ist.

Aus der Praxis bekannte Kraftfahrzeugbatterien, wie sie z. B. als Energiespeicher bzw. Traktionsbatterie in Hybridfahrzeugen oder Elektrofahrzeugen zum Einsatz kommen, verfügen typischerweise über ein oder mehrere Batteriemodule, wobei jedes Batteriemodul mehrere Batteriezellen aufweist. Um einen ordnungsgemäßen Betrieb und eine Beschädigung einer Kraftfahrzeugbatterie zu vermeiden, muss dieselbe in einem definierten Temperaturbereich betrieben werden. Bislang bereitet es Schwierigkeiten, die Temperatur einer Kraftfahrzeugbatterie, die mehrere Batteriezellen aufweist, einfach und zuverlässig zu bestimmen. Insbesondere bereitet die Platzierung von Temperatursensoren Schwierigkeiten.

Aus der DE 10 2010 055 612 A1 ist eine Kraftfahrzeugbatterie bekannt, bei der die Batteriezellen über Stromableiter und/oder Stromschienen verschaltet sind, mit Temperatursensoren im Bereich der Batterieeinzelzellen und mit einer Spannungsmessung für jede der Batterieeinzelzellen, welche jeweils über ein elektrisches Kontaktelement mit jeweils einer der Elektroden jeder der Batterieeinzelzellen in Kontakt steht, wobei auf jedem der elektrischen Kontaktelemente ein Temperatursensor angeordnet ist. Nachteilig ist hier die hohe Anzahl von Temperatursensoren für die Überwachung der Zelle, was vergleichsweise teuer in der Herstellung ist. Ferner entspricht die Temperatur an den Zellverbindern nicht der Zelltemperatur und kann so zu einer ungenaueren Temperaturbestimmung der Batteriezellen führen.

In der Patentanmeldung EP 2 479 835 A2 wird eine Temperaturmessung zwischen den Zellen beschrieben. Nachteilig ist, dass der Temperatursensor schwer zugänglich ist und dessen Anbringung fertigungstechnisch aufwändig ist

Im Stand der Technik, z. B. DE 100 56 972 A1 oder WO 2013/072281, ist es ferner bekannt, Sensoren zur Bestimmung der Batterietemperatur innerhalb des Gehäuses einer Batteriezelle anzuordnen. Nachteilig ist, dass die Zelle geöffnet werden muss, um im Fehlerfall einen Temperatursensor austauschen zu können. Ferner ist das Ausstatten jeder Zelle mit einem integrierten Temperatursensor vergleichsweise teurer in der Herstellung.

Aus der DE 10 2012 107 866 A1 ist ferner eine Kraftfahrzeugbatterie bekannt, wobei zwischen mindestens zwei Batteriezellen mindestens eines Batteriemoduls eine Blindzelle mit mindestens einem Temperatursensor angeordnet ist. Nachteilig an dieser Kraftfahrzeugbatterie ist der erforderliche hohe Bauraumbedarf aufgrund des für die Blindzelle(n) benötigten Platzes, der nicht für Speicherzellen zur Verfügung steht.

Aus der US 2013/266 833 A1 ist ferner eine Kraftfahrzeugbatterie bekannt mit einer auf einer Mehrzahl von Batteriezellen angeordneten Gehäusedeckel, der eine Öffnung aufweist, um eine Temperaturmessvorrichtung über die Öffnung zur Temperaturmessung der Batteriezellen einzubringen.

Es ist somit eine Aufgabe der Erfindung, eine verbesserte Kraftfahrzeugbatterie mit einer Messeinrichtung zur Bestimmung der Batterietemperatur bereitzustellen, mit der Nachteile herkömmlicher Kraftfahrzeugbatterien vermieden werden können. Die Aufgabe der Erfindung ist es insbesondere, eine Kraftfahrzeugbatterie bereitzustellen, die eine einfachere Platzierung wenigstens eines Temperatursensors und eine kostensparendere Gestaltung einer Fahrzeugbatterie mit einer Möglichkeit zur Überwachung der Batterietemperatur ermöglicht.

Diese Aufgaben werden durch eine Kraftfahrzeugbatterie mit den Merkmalen des Hauptanspruchs gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Kraftfahrzeugbatterie umfasst ein Batteriemodul, das mehrere stapelartig nebeneinander bzw. hintereinander angeordnete Batteriezellen aufweist, einen auf den Batteriezellen angeordneten Gehäusedeckel, aufweisend Durchgangsöffnungen für die Pole, und eine auf dem Gehäusedeckel und zwischen den Polen der Zellen angeordnete Elektronikeinheit, die über Leiterbahnen, insbesondere flexible Leiterbahnen, in elektrischer Verbindung mit den Zellen steht. Die Kraftfahrzeugbatterie, nachfolgend auch kurz als Batterie bezeichnet, kann eine Hochleistungs- oder Hochvoltbatterie in Form einer Lithium-Ionen-Batterie sein, wie sie als Traktionsbatterien für zumindest teilweise elektrisch angetriebene Fahrzeuge eingesetzt werden. Die Batteriezellen, nachfolgend auch kurz als Zellen bezeichnet, können hierbei in Reihe und/oder parallel zueinander elektrisch verschaltet sein. Der Gehäusedeckel kann insbesondere ein Deckel eines Innengehäuses der Batterie sein, der einen unter dem Gehäusedeckel befindlichen Hohlraum zwischen den polseitigen Zellgehäusen und dem Gehäusedeckel ausbildet. Dies hat den Vorteil, dass die elektrischen Leiterbahnen auf gleicher Höhe wie die Elektronikeinheit betriebssicher angeordnet werden können. Die Zellen können als prismatische Zellen oder in Form von sog. Pouch-Zellen ausgebildet sein.

Gemäß allgemeinen Gesichtspunkten der Erfindung weist der Gehäusedeckel wenigstens eine Einbringeinrichtung zum Einbringen eines Temperatursensors auf, über die der Temperatursensor auf einem unterhalb des Gehäusedeckels liegenden Abschnitt eines Zellgehäuses einer Zelle anordenbar bzw. positionierbar ist.

Dies bietet den Vorteil, dass die Temperaturmessstelle von außerhalb des Gehäusedeckels zugänglich ist und ein Temperatursensors im Fehlerfall ohne größeren Aufwand ausgetauscht werden kann. Die Batterie ist somit besonders wartungsfreundlich. Ferner erfordert die Anordnung eines Temperatursensor bei der erfindungsgemäßen Fahrzeugbatterie keinen zusätzlichen Bauraum, da ein sonst ungenutzter Totraum unterhalb des Gehäusedeckels ausgenutzt wird. Der Gehäusedeckel ist ein vergleichsweise günstiges und einfach zu fertigendes Bauteil, so dass herkömmliche Batterieaufbauten mit vergleichsweise geringem Aufwand abgewandelt werden können, um die erfindungsgemäße Einbringvorrichtung bereitzustellen.

Der vorgenannte Abschnitt des Zellgehäuses kann ein zu einem Pol der Zelle benachbarter Abschnitt und/oder ein an einen Pol der Zelle angrenzender Abschnitt des Zellgehäuses sein. Diese Variante ermöglicht die Positionierung des Temperatursensors an der wärmsten und von außen zugänglichen Stelle der Batteriezelle, nämlich an einem Bereich in Polnähe. Dies ermöglicht eine besonders genaue Temperaturmessung.

Bei einer vorteilhaften Variante dieser Ausgestaltungsform ist der Pol eine Kathode, die erfahrungsgemäß wärmer als die Anode ist, so dass der Temperatursensor über die Einbringvorrichtung auf dem Zellgehäuse möglichst nahe an der Kathode angeordnet werden kann. Dadurch kann eine weitere Verbesserung der Genauigkeit der Temperaturmessung erzielt werden.

Eine weitere besonders vorteilhafte Möglichkeit der erfindungsgemäßen Realisierung sieht vor, dass die Einbringeinrichtung an einem mittleren Bereich des Gehäusedeckels vorgesehen ist, der eine im mittleren Bereich des Batteriemoduls angeordnete Zelle überdeckt. Dies beruht auf der Feststellung der Erfinder, dass die Wärmeentwicklung in einem Batteriemodul im mittleren Bereich, d. h. an den mittleren Zellen, gewöhnlich am größten ist und folglich eine Positionierung eines Temperatursensors in diesem Bereich eine besonders gute Überwachung der vorgegebenen Betriebsgrenzen der Zellen ermöglicht. Besonders vorteilhaft ist es daher ferner, die Einbringeinrichtung an einem mittleren Bereich des Gehäusedeckels vorzusehen, der eine mittlere Zelle des Batteriemoduls überdeckt.

Bei einem Modul mit gerader Zellenanzahl N kann als mittlere Zelle die N/2-te Zelle oder die (N/2+1)-te Zelle gewählt werden. Bei einem Modul mit ungerader Zellenanzahl (N+1) ist die mittlere Zelle die (N+1)/2-te Zelle. Unter einer Zelle, die im mittleren Bereich des Batteriemodules angeordnet ist, soll eine Zelle verstanden werden, die eine mittlere Zelle ist oder eine Zelle, die benachbart zu einer mittleren Zelle ist.

Erfindungsgemäß ist die Einbringeinrichtung bzw. deren Öffnung am Gehäusedeckel an einer Freifläche des Gehäusedeckels ohne Leiterbahnen zwischen einem Pol und der Elektronikeinheit angeordnet. Eine Freifläche ist somit ein Abschnitt des Gehäusedeckels, an dem keine Leiterbahnen oder andere Komponenten angeordnet sind. Ein besonderer Vorzug liegt darin, dass der Temperatursensor einbringbar und austauschbar ist, ohne die auf dem Gehäusedeckel angeordneten Leiterbahnen, die die Zellen, z. B. zur Spannungsmessung, mit der Elektronikeinheit verbinden, entfernen zu müssen. Dadurch kann das Risiko einer Beschädigung der empfindlichen Leiterbahnen bei der Einbringung eines Temperatursensors verringert und die Montagezeit des Temperatursensors verkürzt werden.

Ferner umfasst die Einbringeinrichtung eine Aufnahme zur ortsfesten Halterung des Temperatursensors, die schräg unterhalb zu der Freifläche in Richtung der Pole angeordnet ist, wobei direkt oberhalb der Aufnahme ein Gehäusedeckelabschnitt verläuft, der für die Anordnung der Leiterbahnen vorgesehen ist und/oder auf dem eine Leiterbahn verläuft. Typischerweise ist die Konzentration von Leiterbahnen unmittelbar seitlich benachbart zu den Polenden auf der der Elektronikeinheit zugewandten Seite am größten. Die noch weiter seitlich zur Elektronikeinheit hin versetzte Anordnung des Gehäusedeckeldurchgangs der Einbringeinrichtung zu der unter den Leiterbahnen befindlichen Aufnahme ermöglicht somit die Einbringung des Temperatursensors über den Gehäusedeckeldurchgang ohne Verschiebung der Leiterbahnen, bei gleichzeitig möglichst naher Platzierung des Temperatursensors an den Polen.

Es ist weiterhin vorteilhaft, die Aufnahme so auszuführen, dass ein darin gehalterter Temperatursensor in Kontakt mit einem Zellgehäuse ist, um eine möglich genaue Temperaturmessung zu erhalten. Beispielsweise kann die Aufnahme so ausgeführt sein, dass diese keinen Boden aufweist, sondern nur seitliche Begrenzungselemente, damit ein auf dem Zellgehäuse aufliegender Temperatursensor gegen horizontale Bewegung gesichert wird.

Die Einbringeinrichtung kann als eine wiederverschließbare Öffnung im Gehäusedeckel ausgebildet sein oder eine wiederverschließbare Öffnung umfassen. Dadurch kann die Öffnung nach Einbringung des Temperatursensors verschlossen werden, um diese vor Verschmutzung zu schützen. Ungeachtet dessen kann die Einbringeinrichtung eine Durchgangsöffnung zur Durchführung einer Signalleitung aufweisen, über die der Temperatursensor mit der Elektronikeinheit in elektrischer Verbindung steht.

Eine bevorzugte Ausgestaltungsform sieht vor, dass die Einbringeinrichtung eine verschiebbar gelagerte Platte, beispielsweise eine Plastikplatte, umfasst, die in eine Offenstellung und in eine Schließstellung bringbar ist, wobei in der Offenstellung eine Öffnung im Gehäusedeckel freigelegt ist und wobei in der Schließstellung die Öffnung verschlossen ist. Dadurch wird ein einfach zu handhabender und platzsparender Mechanismus zur Bereitstellung einer Durchgangsöffnung im Gehäusedeckel ermöglicht.

Hierzu kann die Einbringeinrichtung eine Führungsmechanik zum Verschieben der Platte umfassen, beispielsweise in Form von Führungsschienen, die in Stapelrichtung der Zellen verlaufen und eine Verschiebung der Platte in Stapelrichtung der Zellen ermöglichen. Derartige Führungsschienen sind fertigungstechnisch einfach umsetzbar, beispielsweise durch Ankleben derartiger Führungsschienen oder durch Spritzguss bei der Herstellung des Gehäusedeckels. Vorteilhafterweise ist die verschiebbar gelagerte Platte in der Schließstellung zumindest abschnittsweise unter den Gehäusedeckel geschoben, so dass die Platte beim Ein- und/oder Ausbringen des Temperatursensors nicht beschädigt wird.

Ferner können Anschlagmittel zur Arretierung in der Offenstellung und der Schließstellung vorgesehen sein, um die verschiebbar gelagerte Platte sicher in die Offenstellung und die Schließstellung zu positionieren. Eine kostensparende Ausführungsvariante sieht hierbei vor, die Anschlagmittel durch Vorsprünge an der Unterseite der Platte und der Oberseite der Führungsschienen auszubilden.

In einer weiteren Variante der Erfindung umfasst die Aufnahme eine Kabelhalterung zur Fixierung und Abstützung einer Signalleitung des Temperatursensors. Dies reduziert das Risiko der Beschädigung der elektrischen Kontaktierung des Temperatursensors, beispielsweise aufgrund von im Betrieb auftretenden Vibrationen.

Vorstehend wurde bereits erwähnt, dass die Aufnahme keinen Boden aufweisen kann, jedoch in Richtung zu den benachbarten Batteriezellen jeweils von einem Wandelement begrenzt sein kann. Ferner kann die Aufnahme auf der dem Pol abgewandten Seite von einem steckbaren Wandelement begrenzt werden. Das steckbare Wandelement ist besonders bei der schräg unterhalb der Einbringöffnung angeordneten Aufnahme vorteilhaft, da diese zum Einbringen des Sensors entfernt und nach Einbringen wieder eingesteckt werden kann.

Gemäß einem weiteren Aspekt der Erfindung kann ein in der Aufnahme gehalterter Temperatursensor vorgesehen sein, der von einem stoßdämpfenden Material ummantelt ist. Das stoßdämpfende Material kann beispielsweise Schaumstoff sein. Dadurch kann der Temperatursensor besser gegen auftretende Vibrationen geschützt werden. Gleichzeitig dient der Schaumstoff als Füllmaterial, um die Ausnahme auszufüllen und so den Temperatursensor gegen ein Verrutschen zu sichern.

Es wird betont, dass sich die vorliegende Erfindung auch dahingehend verallgemeinern lässt, dass mehrere der vorstehenden Einbringeinrichtungen vorgesehen sind, um weitere Temperatursensoren an den Zellen anzubringen. Mit anderen Worten kann der Gehäusedeckel wenigstens eine weitere Einbringeinrichtung zum Einbringen wenigstens eines weiteren Temperatursensors aufweisen, über die der wenigstens eine weitere Temperatursensor an einer unterhalb des Gehäusedeckels im Polbereich einer Zelle liegenden weiteren Messstelle anordenbar ist.

Beispielsweise kann eine weitere Einbringeinrichtung in einem Bereich des Gehäusedeckels angeordnet sein, der eine äußere Batteriezelle des Batteriemoduls überdeckt, vorzugsweise eine ganz außen liegende Batteriezelle, so dass ein weiterer Temperatursensor an einer unterhalb des Gehäusedeckels im Polbereich einer äußeren Zelle liegenden Messstelle anordenbar ist. Diese Variante bietet den Vorteil, dass der Temperaturunterschied zwischen der äußeren und einer mittleren Zelle erfasst werden kann und aus dem Temperaturunterschied die Temperatur der dazwischenliegenden Zelle extrapoliert werden kann. Damit kann eine Temperaturüberwachung aller Zellen durchgeführt werden, ohne an jeder Zelle einen separaten Temperatursensor vorsehen zu müssen.

Eine weitere vorteilhafte Variante sieht hierbei vor, zwei Temperatursensoren im mittleren Bereich des Batteriemoduls vorzusehen, um zuverlässiger Fehlmessungen ausschließen zu können und zur Redundanz im Fehlerfall.

Ein weiterer Aspekt der Erfindung betrifft ein Kraftfahrzeug, vorzugsweise ein Nutzfahrzeug, mit einer Kraftfahrzeugbatterie, wie vorstehend offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Draufsicht einer Fahrzeugbatterie gemäß einer Ausführungsform der Erfindung;
- Figur 2: eine schematische Detailansicht in Draufsicht einer Fahrzeugbatterie gemäß einer Ausführungsform der Erfindung;
- Figur 3: eine schematische Detailansicht in Vorderansicht einer Fahrzeugbatterie gemäß einer Ausführungsform der Erfindung; und
- Figur 4: eine schematische Detailansicht in Seitenansicht einer verschiebbaren Klappe gemäß einer Ausführungsform der Erfindung.

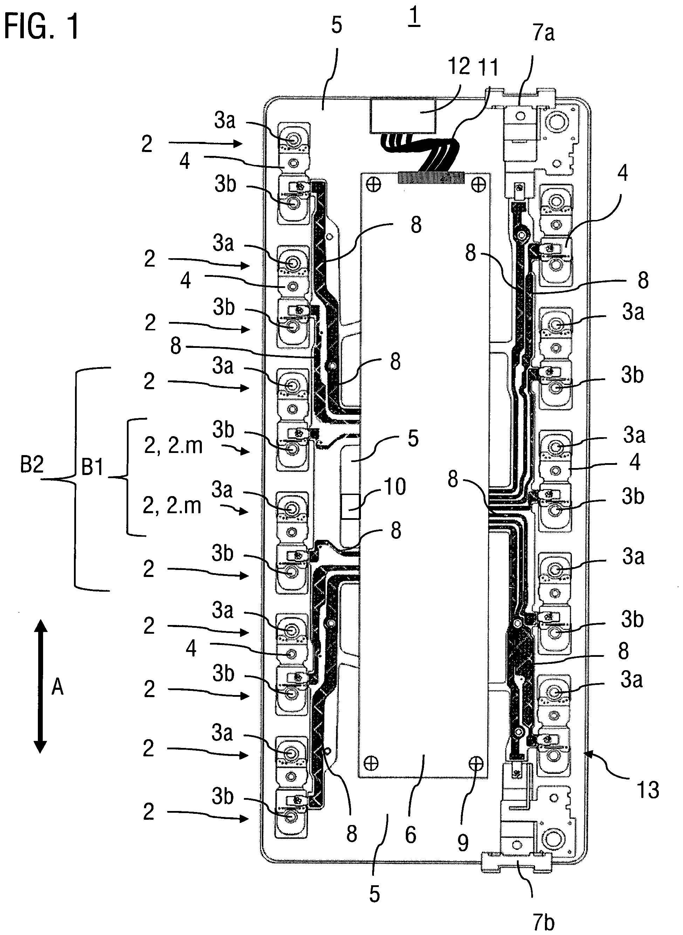

Figur 1 zeigt eine schematische Draufsicht auf eine teilweise geöffnete Fahrzeugbatterie 1 (ohne Außengehäuse). Die Kraftfahrzeugbatterie 1 wird von einem Innengehäuse 13 aus Kunststoff oder einem Material mit schlechter Wärmeleitfähigkeit umgeben, in welchem ein Batteriemodul, gebildet aus mehreren Batteriezellen 2, aufgenommen ist. Die Batteriezellen 2 sind stapelartig hintereinander bzw. nebeneinander angeordnet, von denen in Figur 1 nur die Pole bzw. Polenden 3a, b zu sehen sind. Die Zellen 2 sind von einem Gehäusedeckel 5 des inneren Batteriegehäuses 13 überdeckt, der für jede Zelle jeweils zwei Durchgangsöffnungen aufweist, durch die die beiden Pole bzw. die Polenden 3a, 3b jeder Zelle 2 hervortreten. Die in Figur 1 gezeigte Batterie wird aus 12 Batteriezellen gebildet. Die Größe des Stapels lässt sich dabei entsprechend der benötigten Leistung variieren. Die in Lithium-Ionen-Technologie ausgeführten Batteriezellen 2 sind als prismatische Zellen ausgebildet. Die Anzahl, Art und Form der Batteriezellen sind jedoch beliebig.

Die zwei Anschlusspole 3a, 3b jeder Batteriezelle 2 dienen dem elektrischen Zusammenschalten der einzelnen Batteriezellen 2 zum jeweiligen Batteriemodul bzw. zur Kraftfahrzeugbatterie 1. Je nach Anforderungen können die Zellen 2 parallel und/oder seriell verschaltet werden. Das Zusammenschalten der Zellen 2 erfolgt über leitende Zellverbinder 4. In Figur 1 ist eine serielle Verschaltung der Zellen gezeigt, wobei die Kathode 3a einer Zelle mit der Anode 3b der nachfolgenden Zelle und die Anode 3b der Zelle mit der Kathode 3a der vorhergehenden Zelle verschaltet ist. In Figur 1 sind nur einige der Zellen 2 und Zellverbinder 4 mit Bezugszeichen gekennzeichnet. Die jeweils äußeren Pole sind mit den Anschlusspolen 7a, 7b der Batterie verbunden.

Auf dem Gehäusedeckel 5 ist zwischen den Polen 3a, 3b der Zellen 2 eine Elektronikeinheit 6 angeordnet, die über Leiterbahnen 8 in elektrischer Verbindung mit den Zellen 2 steht.

In Figur 1 ist zur Vereinfachung der Darstellung die Detailstruktur (z. B. Bestückung) der Elektronikeinheit 6, die in üblicher Weise ausgeführt ist, nicht dargestellt. Dargestellt sind lediglich die vier Schrauben 9, mit denen die Elektronikeinheit 6 auf dem Gehäusedeckel 5 verschraubt ist. Wie aus der Darstellung der Figur 1 jedoch zu erkennen ist, ist diese Elektronikeinheit 6 dabei als eine einzige mit der Batterie 1 integrierte Elektronikeinheit 6 ausgebildet, welche über eine Vielzahl von flexiblen Leiterbahnen 8, die auf dem Gehäusedeckel 5 im Bereich zwischen den Polenden 3a, 3b und der Elektronikeinheit 6 verlaufen, mit den jeweiligen Anschlusselementen der Batterieeinzelzellen 2 in elektrischer Verbindung steht. Diese Elektronikeinheit 6 dient dabei der Erfassung der Spannungen der einzelnen Batterieeinzelzellen 2 und zur Steuerung des Batteriebetriebs und kann ferner zum Ausgleich unterschiedlicher Ladungszustände der einzelnen Zellen 2 genutzt werden. Die Elektronikeinheit 6 wird auch als sog. Balancing Board bezeichnet. Die Spannungsmesswerte werden über die Elektronikeinheit 6 entsprechend ausgewertet und/oder über die Anschlussleitungen 11 und die Steckverbindung 12 über einen Datenbus an eine Zentralelektronik, beispielsweise eines Fahrzeugs, weitergegeben.

In den Gehäusedeckel 5 ist eine Einbringeinrichtung 10 zum Einbringen eines Temperatursensors integriert. Mittels der Einbringeinrichtung kann der Temperatursensor (nicht gezeigt) auf einem unterhalb des Gehäusedeckels 5 liegenden Abschnitt eines Zellgehäuses einer Zelle 2 angeordnet werden. Die Einbringeinrichtung 10 bildet eine wiederverschließbare Öffnung im Gehäusedeckel 5 aus, die an einem mittleren Bereich B1 des Gehäusedeckels 5 vorgesehen ist, der eine mittlere Zelle 2.m des Batteriemoduls überdeckt.

Da die in Figur 1 gezeigte Batterie 1 aus 12 Batteriezellen 2 gebildet ist, gibt es zwei mittlere Zellen, nämlich die Zellen Nr. 6 und 7, die in Figur 1 mit dem Bezugszeichen 2.m bezeichnet sind. Bei gerader Zellenanzahl N sind die mittleren Zellen die Zellen N/2 und/oder N/2+1; bei ungerader Zellenanzahl (N+1) ist die mittlere Zelle die (N+1)/2-te Zelle. Die mittleren Zellen weisen die höchsten Temperaturen auf, so dass vorteilhafterweise dort die Temperatur gemessen wird und folglich die Einbringeinrichtung 10 in dem entsprechenden mittleren Bereich B1 des Gehäusedeckels 5 vorgesehen ist. Besonders vorteilhaft ist die Messung an der Kathode 3a, so dass von den beiden mittleren Zellen 2.m in Figur 1 die Kathode 3a zur Temperaturmessung ausgewählt wird und entsprechend die Einbringvorrichtung 10 auf Höhe der mittleren Kathode vorgesehen ist.

Möglich, aber weniger vorteilhaft ist auch eine Anordnung der Einbringeinrichtung 10 im Bereich B2 oder auch außerhalb dieses Bereichs.

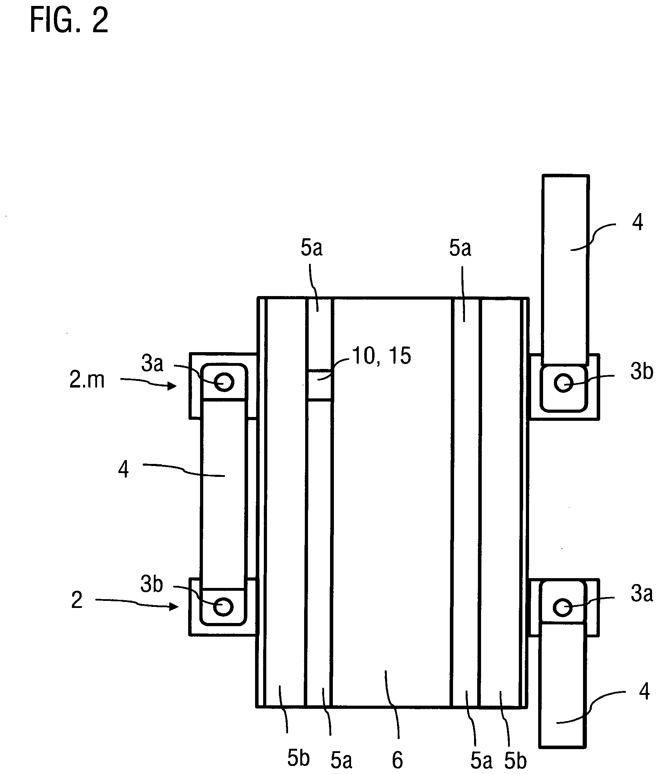

In Figur 2 ist der Bereich um die Einbringvorrichtung 10 nochmals in einer schematischen Detailansicht dargestellt. Hierbei sind die flexiblen Leiterbahnen 8 in Figur 2 nicht dargestellt, sondern stattdessen die beidseitig der Elektronikeinheit 6 verlaufenden Abschnitte 5b des Gehäusedeckels 5, auf denen diese Leiterbahnen 8 in Richtung A verlaufend angeordnet sind (mit Ausnahme des senkrecht zur Richtung A verlaufenden Abschnitts der Leiterbahnen 8, der zum Anschluss an die Elektronikeinheit 6 dient). Die Einbringeinrichtung 10 umfasst zur Ausbildung der wiederverschließbaren Durchgangsöffnung im Gehäusedeckel 5 eine verschiebbar gelagerte Kunststoffplatte 15, die in eine Offenstellung und in eine Schließstellung bringbar ist. In der Offenstellung ist eine Öffnung im Gehäusedeckel 5 freigelegt, und in der Schließstellung ist die Öffnung verschlossen. Die Platte 15 ist rechts von dem Gehäusedeckelabschnitt 5b auf dem Gehäusedeckelabschnitt 5a angeordnet, an einer Freifläche ohne Leiterbahnen 8, so dass zum Einbringen und/oder Austausch des Temperatursensors über die Einbringeinrichtung keine der verlegten Leiterbahnen 8 entfernt werden muss.

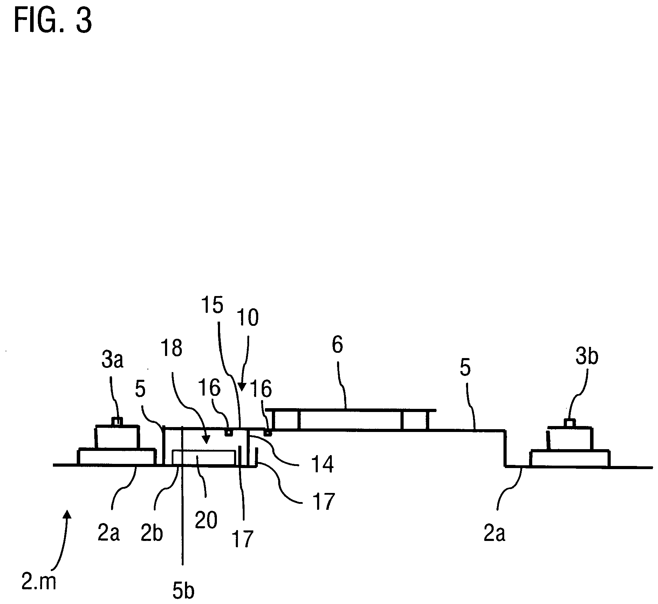

Figur 3 zeigt eine schematische Vorderansicht im Schnitt einer Ausführungsform, wobei nur der obere Bereich der Batterie 1 im Bereich der mittleren Zelle 2.m gezeigt ist. Wie aus Figur 3 ersichtlich, ist der obere Gehäusedeckel 5 auf einer im Wesentlichen gleichen Höhe wie die Poleenden 3a, 3b angeordnet, so dass die flexiblen Leiterbahnen (nicht dargestellt) auf gleicher Höhe wie die Polenden 3, 3b auf dem dafür vorgesehenen Abschnitt 5b des Gehäusedeckels 5 angeordnet werden können. Dargestellt ist nur der zwischen den Polenden 3, 3b liegende Abschnitt des Gehäusedeckels 5. Der Gehäusedeckel 5 bildet somit einen Hohlraum zwischen dem Zellgehäuse 2a und seiner Unterseite aus. Dieser Hohlraum wird zur Ausbildung einer Aufnahme 18 zur Halterung des Temperatursensors 20 genutzt. Die Aufnahme 18 ist schräg unterhalb zu der durch die bewegliche Platte 15 ausgebildeten wiederverschließbaren Öffnung angeordnet und verläuft direkt unterhalb des Gehäusedeckelabschnitts 5b, der für die Anordnung der Leiterbahnen 8 vorgesehen ist. Dadurch kann der Temperatursensor 20 auf einem unterhalb des Gehäusedeckels 5 liegenden Abschnitt 2b eines Zellgehäuses 2a platziert werden, der ein zu der Kathode 3a der mittleren Zelle 2.m angrenzender Abschnitt 2b des Zellgehäuses 2a ist. Das Zellgehäuse 2a bildet im oberen Endbereich der Zelle eine durchgehende Fläche, ist jedoch in Figur 3 nur abschnittsweise dargestellt.

Der Temperatursensor 20 kann als üblicher Messfühler, beispielsweise als eine NTC-Messeinheit, ausgeführt sein.

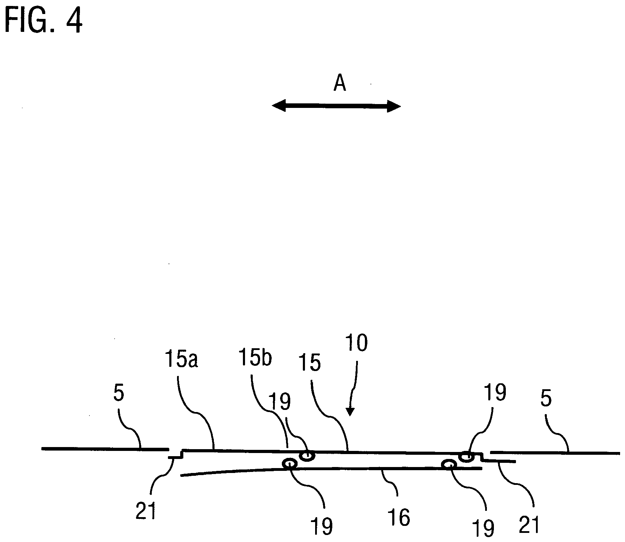

Die Kunststoffplatte 15 ist auf zwei in Richtung A verlaufenden Führungsschienen 16 verschiebbar gelagert, was lediglich schematisch in Figur 4 illustriert ist. Auf der Oberseite der Führungsschienen 16 und der Unterseite der Kunststoffplatte 15 sind Vorsprünge 19 als Anschläge zur Arretierung der Platte 15 jeweils in der Offenstellung und der Schließstellung angebracht. Auf der Oberseite der Platte 15 ist eine Riffelung (nicht gezeigt) angebracht, um das Verschieben der Platte 15 zu erleichtern. Ferner weist die Platte 15 endseitig zwei Nuten 21 auf, damit in der Schließstellung kein Durchgangsspalt im Gehäusedeckel 5 entsteht.

Figur 4 zeigt die Platte 15 in der Schließstellung. Zum Verschieben der Platte 15 in die Offenstellung kann ein Benutzer mit einem Finger auf den vorderen Abschnitt 15a drücken, dadurch wird dieser Abschnitt unter den Gehäusedeckel 5 gedrückt, gleichzeitig wölbt sich der Abschnitt 15b der Platte 15 an den vorderen Vorsprüngen 19 nach oben, so dass die Platte 15 in Figur 4 über die Vorsprünge 19 hinweg nach links verschoben werden kann. Dabei wird die Platte 15 unter den Gehäusedeckel 5 verschoben. Dadurch bildet sich eine Öffnung im Gehäusedeckel 5 aus, über die der Temperatursensor 20 eingeführt werden kann.

Damit der Temperatursensor 20 in der Aufnahme 18 ortsfest gelagert ist, wird die Aufnahme 18 beidseitig in Richtung A durch Trennwände begrenzt (nicht dargestellt), die entweder an den Gehäusedeckel 5 unterseitig angeformt sind, beispielsweise bereits bei der Herstellung im Spritzgussverfahren oder durch nachträgliches Ankleben der Trennwände. Ferner ist eine Trennwand 14 auf der dem Pol 3a abgewandten Seite der Aufnahme 18 vorgesehen. Diese Trennwand ist steckbar ausgeführt, so dass die Trennwand 14 nach Öffnung der Platte 15 abgenommen werden kann, damit der Temperatursensor 20 von außen durch den Gehäusedeckel 5 in der Aufnahme 18 angeordnet werden kann. Anschließend wird die Trennwand 14 vor Verschließen der Klappe 15 wieder eingesteckt, damit der Temperatursensor 20 nicht in Richtung des gegenüberliegenden Pols 3b verrutschen kann. Zu Halterung der Trennwand 14 sind untere Führungsschienen 17 auf dem Zellgehäuse 2a vorgesehen. Die Trennwand 14 dient auch als Kabelhalterung des Signalkabels des Temperatursensors 20. Im Bereich der Einbringeinrichtung 20 ist ferner im Gehäusedeckel 5 eine Durchgangsöffnung (nicht gezeigt) vorgesehen, über die das Signalkabel des Temperatursensors 20 nach außen geführt werden kann.

Der Temperatursensor 20 wird vor der Montage mit Schaumstoff ummantelt. Der Schaumstoff hat eine Aussparung, in die der Temperatursensor und das Signalkabel gesetzt werden. Der Schaumstoff kann zusammengedrückt werden und so in das Behältnis eingebracht werden. Nach dem Einbringen dehnt er sich aus und dient somit auch als Füllmaterial, um ein Verrutschen des Temperatursensors 20 in der Aufnahme 18 zu vermeiden. Der Schaumstoff dient ferner als ein Dämpfungselement zwischen Zelle 2.m und Gehäuse 5 als Schutz vor Vibrationen. Beispielsweise kann der Schaumstoff mit Haltern (z. B. aus einem Klebeband) vor der Montage, d. h. dem Einbringen des ummantelten Sensors 20, zusammengedrückt werden. Nach Einbringen des Sensors durch die Öffnung im Gehäuse und Positionierung in dem Aufbewahrungsbehältnis 18 wird das Klebeband aufgetrennt, und der Schaumstoff kann sich ausdehnen.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

### Bezugszeichenliste

- 1: Kraftfahrzeugbatterie
- 2: Batteriezelle
- 2a: Oberes Zellgehäuse
- 2b: An den Pol angrenzender Abschnitt des oberen Zellgehäuses
- 2.m: Mittlere Batteriezelle eines Batteriemoduls
- 3a, 3b: Pole bzw. Polenden der Batteriezelle
- 4: Zellverbinder
- 5: Gehäusedeckel
- 5a, 5b: Gehäusedeckelabschnitt
- 6: Elektronikeinheit
- 7a, 7b: Anschlusspol der Kraftfahrzeugbatterie
- 8: Flexible Leiterbahn
- 9: Schraube
- 10: Einbringeinrichtung
- 11: Kabel
- 12: Kabelsteckverbindung
- 13: Innengehäuse
- 14: Steckbare Trennwand
- 15: Kunststoffplatte
- 16: Führungsschiene
- 17: Führungsschiene
- 18: Aufnahme
- 19: Vorsprünge
- 20: Temperatursensor
- 21: Nut

## Patentansprüche

1. Kraftfahrzeugbatterie (1), mit
einem Batteriemodul, das mehrere stapelartig nebeneinander angeordnete Batteriezellen (2) aufweist,
einem auf den Batteriezellen angeordneten Gehäusedeckel (5), aufweisend Durchgangsöffnungen für die Pole (3a, 3b) der Zellen (2),
einer Elektronikeinheit (6), die über Leiterbahnen (8) in elektrischer Verbindung mit den Zellen (2) steht,
wobei der Gehäusedeckel (5) wenigstens eine Einbringeinrichtung (10) zum Einbringen eines Temperatursensors (20) aufweist, über die der Temperatursensor (20) auf einem unterhalb des Gehäusedeckels (5) liegenden Abschnitt eines Zellgehäuses (2a) einer Zelle (2) anordenbar ist;
**dadurch gekennzeichnet,**
**dass** die Elektronikeinheit (6) auf dem Gehäusedeckel (5) und zwischen den Polen (3a, 3b) der Zellen (2) angeordnet ist; und
**dass** die Einbringeinrichtung (10) an einer Freifläche ohne Leiterbahnen (8) zwischen einem Pol (3a, 3b) und der Elektronikeinheit (6) angeordnet ist, und dass die Einbringeinrichtung (10) eine Aufnahme (18) zur Halterung des Temperatursensors (20) umfasst, die schräg unterhalb zu der Freifläche in Richtung der Pole (3a, 3b) angeordnet ist, wobei direkt oberhalb der Aufnahme (18) ein Gehäusedeckelabschnitt (5b) verläuft, der für die Anordnung der Leiterbahnen (8) vorgesehen ist und/oder auf dem eine Leiterbahn (8) verläuft.

2. Kraftfahrzeugbatterie nach Anspruch 1, **dadurch gekennzeichnet, dass** dieser Abschnitt des Zellgehäuses (2a) ein zu einem Pol (3a, 3b) der Zelle (2) benachbarter Abschnitt (2b) und/oder ein an einen Pol der Zelle angrenzender Abschnitt (2b) des Zellgehäuses ist.

3. Kraftfahrzeugbatterie nach Anspruch 1 oder 2, **dadurch gekennzeichnet,**
a) **dass** die Einbringeinrichtung (10) an einem mittleren Bereich (B1, B2) des Gehäusedeckels (5) vorgesehen ist, der eine im mittleren Bereich des Batteriemoduls angeordnete Zelle überdeckt; und/oder
b) **dass** die Einbringeinrichtung an einem mittleren Bereich (B1) des Gehäusedeckels (5) vorgesehen ist, der eine mittlere Zelle (2.m) des Batteriemoduls überdeckt.

4. Kraftfahrzeugbatterie nach einem der vorhergehenden Ansprüche, **dadurch gekennzeichnet, dass** die Aufnahme (18) so ausgeführt ist, dass ein darin gehalterter Temperatursensor (20) in Kontakt mit einem Zellgehäuse (2b) ist.

5. Kraftfahrzeugbatterie nach einem der vorhergehenden Ansprüche, **dadurch gekennzeichnet, dass** die Einbringeinrichtung (10) als eine wiederverschließbare Öffnung im Gehäusedeckel (5) ausgebildet ist.

6. Kraftfahrzeugbatterie nach einem der vorhergehenden Ansprüche, **dadurch gekennzeichnet, dass** die Einbringeinrichtung eine verschiebbar gelagerte Platte (15) umfasst, die in eine Offenstellung und in eine Schließstellung bringbar ist, wobei in der Offenstellung eine Öffnung im Gehäusedeckel (5) freigelegt ist und wobei in der Schließstellung die Öffnung verschlossen ist.

7. Kraftfahrzeugbatterie nach Anspruch 6, **dadurch gekennzeichnet,**
a) **dass** die Einbringeinrichtung eine Führungsmechanik (16) zum Verschieben der Platte (15) und/oder Anschlagmittel (19) zur Arretierung in der Offenstellung und der Schließstellung umfasst; und/oder
b) **dass** die verschiebbar gelagerte Platte in der Schließstellung zumindest abschnittsweise unter den Gehäusedeckel (5) geschoben ist; und/oder
c) **dass** zumindest ein Teil einer Oberfläche der verschiebbar gelagerten Platte (15) geriffelt ausgeführt ist.

8. Kraftfahrzeugbatterie nach einem der vorhergehenden Ansprüche, **dadurch gekennzeichnet,**
a) **dass** die Aufnahme (18) eine Kabelhalterung (14) zur Fixierung einer Signalleitung des Temperatursensors umfasst; und/oder
b) **dass** die Aufnahme (18) in Richtung (A) zu den benachbarten Batteriezellen (2) jeweils von einem Wandelement begrenzt wird und dass die Aufnahme auf der dem Pol abgewandten Seite von einem steckbaren Wandelement (14) begrenzt wird.

9. Kraftfahrzeugbatterie nach einem der vorhergehenden Ansprüche, **gekennzeichnet durch** einen in der Aufnahme (18) gehalterten Temperatursensor (20), der von einem stoßdämpfenden Material ummantelt ist.

10. Kraftfahrzeugbatterie nach Anspruch 9, **dadurch gekennzeichnet, dass** das stoßdämpfende Material Schaumstoff ist.

11. Kraftfahrzeugbatterie nach einem der vorhergehenden Ansprüche, **dadurch gekennzeichnet, dass** der Gehäusedeckel (5) wenigstens eine weitere Einbringeinrichtung zum Einbringen wenigstens eines weiteren Temperatursensors, mit dem die Temperatur einer Batteriezelle erfassbar ist, aufweist, über die der wenigstens eine weitere Temperatursensor an einer unterhalb des Gehäusedeckels im Polbereich einer Zelle liegenden weiteren Messstelle anordenbar ist.

12. Kraftfahrzeugbatterie nach Anspruch 11, **dadurch gekennzeichnet, dass** eine der wenigstens einen weiteren Einbringeinrichtung in einem Bereich des Gehäusedeckels angeordnet ist, der eine äußere Batteriezelle des Batteriemoduls überdeckt, so dass ein weiterer Temperatursensor an einer unterhalb des Gehäusedeckels im Polbereich einer äußeren Zelle liegenden Messstelle anordenbar ist.

13. Kraftfahrzeug, vorzugsweise Nutzfahrzeug, mit einer Kraftfahrzeugbatterie (1) nach einem der Ansprüche 1 bis 12.

## Claims

1. A motor vehicle battery (1) comprising
a battery module which has a plurality of battery cells (2) which are arranged next to one another in the form of a stack,
a housing cover (5) which is arranged on the battery cells and has passage openings for the poles (3a, 3b) of the cells (2),
an electronics unit (6) which is electrically connected to the cells (2) by means of conductor tracks (8),
wherein the housing cover (5) has at least one insertion device (10) for inserting a temperature sensor (20), by means of which insertion device the temperature sensor (20) can be arranged on a section of a cell housing (2a) of a cell (2), which section is situated below the housing cover (5);
**characterized**
**in that** the electronics unit (6) is arranged on the housing cover (5) and between the poles (3a, 3b) of the cells (2); and
**in that** the insertion device (10) is arranged on a free surface without conductor tracks (8) between a pole (3a, 3b) and the electronics unit (6), and
**in that** the insertion device (10) comprises a receptacle (18) for holding the temperature sensor (20), which receptacle is arranged obliquely below the free surface in the direction of the poles (3a, 3b), wherein a housing cover section (5b), which is provided for the arrangement of the conductor tracks (8) and/or on which a conductor track (8) runs, runs directly above the receptacle (18).

2. The motor vehicle battery according to Claim 1, **characterized in that** this section of the cell housing (2a) is a section (2b) which is adjacent to a pole (3a, 3b) of the cell (2) and/or a section (2b) of the cell housing, which section adjoins a pole of the cell.

3. The motor vehicle battery according to Claim 1 or 2, **characterized**
a) **in that** the insertion device (10) is provided on a middle region (B1, B2) of the housing cover (5), which middle region covers a cell which is arranged in the middle region of the battery module; and/or
b) **in that** the insertion device is provided on a middle region (B1) of the housing cover (5), which middle region covers a middle cell (2.m) of the battery module.

4. The motor vehicle battery according to one of the preceding claims, **characterized in that** the receptacle (18) is designed such that a temperature sensor (20) which is held therein is in contact with a cell housing (2b) .

5. The motor vehicle battery according to one of the preceding claims, **characterized in that** the insertion device (10) is designed as a recloseable opening in the housing cover (5).

6. The motor vehicle battery according to one of the preceding claims, **characterized in that** the insertion device comprises a displaceably mounted plate (15) which can be moved to an open position and to a closed position, wherein an opening in the housing cover (5) is exposed in the open position and wherein the opening is closed in the closed position.

7. The motor vehicle battery according to Claim 6, **characterized**
a) **in that** the insertion device comprises a guide mechanism (16) for displacing the plate (15) and/or stop means (19) for locking in the open position and the closed position; and/or
b) **in that** the displaceably mounted plate is pushed at least in sections beneath the housing cover (5) in the closed position; and/or
c) **in that** at least a portion of a surface of the displaceably mounted plate (15) is of corrugated design.

8. The motor vehicle battery according to one of the preceding claims, **characterized**
a) **in that** the receptacle (18) comprises a cable holder (14) for fixing a signal line of the temperature sensor; and/or
b) **in that** the receptacle (18) is delimited in the direction (A) of the adjacent battery cells (2) by a wall element in each case, and in that the receptacle is delimited, on that side which is averted from the pole, by a wall element (14) which can be inserted.

9. The motor vehicle battery according to one of the preceding claims, **characterized by** a temperature sensor (20) which is held in the receptacle (18) and sheathed by a shock-absorbing material.

10. The motor vehicle battery according to Claim 9, **characterized in that** the shock-absorbing material is foam.

11. The motor vehicle battery according to one of the preceding claims, **characterized in that** the housing cover (5) has at least one further insertion device for inserting at least one further temperature sensor with which the temperature of a battery cell can be detected, by means of which further insertion device the at least one further temperature sensor can be arranged at a further measurement point which is situated below the housing cover in the pole region of a cell.

12. The motor vehicle battery according to Claim 11, **characterized in that** one of the at least one further insertion device is arranged in a region of the housing cover which covers an outer battery cell of the battery module, so that a further temperature sensor can be arranged at a measurement point which is situated below the housing cover in the pole region of an outer cell.

13. A motor vehicle, preferably utility vehicle, comprising a motor vehicle battery (1) according to one of Claims 1 to 12.

## Revendications

1. Batterie de véhicule automobile (1), avec
un module batterie qui comporte plusieurs cellules de batterie (2) placées côte à côte en empilement, un couvercle de boîtier (5) placé sur les cellules de batterie, comportant des orifices de passage pour les pôles (3a, 3b) des cellules (2),
une unité électronique (6), qui par l'intermédiaire de pistes conductives (8) est en connexion électrique avec les cellules (2),
le couvercle de boîtier (5) comportant au moins un système d'introduction (10) destiné à introduire un capteur de température (20), par l'intermédiaire duquel le capteur de température (20) peut être placé sur une section située en dessous du couvercle de boîtier (5) d'un boîtier de cellule (2a) d'une cellule (2) ;
**caractérisée**
**en ce que** l'unité électronique (6) est placée sur le couvercle de boîtier (5) et entre les pôles (3a, 3b) des cellules (2) ; et
**en ce que** le système d'introduction (10) est placé sur une surface libre, exempte de pistes conductives (8), entre un pôle (3a, 3b) et l'unité électronique (6) et en ce que le système d'introduction (10) comprend un logement (18) pour fixer le capteur de température (20) qui est placé en oblique, en-dessous, vers la surface libre, dans la direction des pôles (3a, 3b), directement au-dessus du logement (18) s'étendant une section (5b) de couvercle de boîtier qui est prévue pour le placement des pistes conductives (8) et/ou sur laquelle s'étend une piste conductive (8).

2. Batterie de véhicule automobile selon la revendication 1, **caractérisée en ce que** ladite section du boîtier de cellule (2a) est une section (2b) voisine du pôle (3a, 3b) de la cellule (2) et/ou une section (2b) adjacente à un pôle de la cellule du boîtier de cellule.

3. Batterie de véhicule automobile selon la revendication 1 ou 2, **caractérisée**
a) **en ce que** le système d'introduction (10) est prévu dans une région centrale (B1, B2) du couvercle de boîtier (5) qui recouvre une cellule placée dans la région centrale du module batterie ; et/ou
b) **en ce que** le système d'introduction est prévu dans une région centrale (B1) du couvercle de boîtier (5) qui recouvre une cellule centrale (2.m) du module batterie.

4. Batterie de véhicule automobile selon l'une quelconque des revendications précédentes, **caractérisée en ce que** le logement (18) est conçu de telle sorte qu'un capteur de température (20) fixé à l'intérieur soit en contact avec un boîtier de cellule (2b).

5. Batterie de véhicule automobile selon l'une quelconque des revendications précédentes, **caractérisée en ce que** le système d'introduction (10) est conçu sous la forme d'un orifice refermable dans le couvercle de boîtier (5).

6. Batterie de véhicule automobile selon l'une quelconque des revendications précédentes, **caractérisée en ce que** le système d'introduction comprend une plaque (15) logée de manière déplaçable, qui peut être amenée dans une position d'ouverture et dans une position de fermeture, dans la position d'ouverture, un orifice dans le couvercle de boîtier (5) étant libéré et dans la position de fermeture, l'orifice étant fermé.

7. Batterie de véhicule automobile selon la revendication 6, **caractérisée**
a) **en ce que** le système d'introduction comprend un mécanisme de guidage (16) pour le déplacement de la plaque (15) et/ou des moyens de butée (19) pour le blocage dans la position d'ouverture et la position de fermeture ; et/ou
b) **en ce que** dans la position de fermeture, la plaque logée en étant déplaçable est poussée au moins par endroits sous le couvercle de boîtier (5) ; et/ou
c) **en ce qu'**au moins une partie d'une surface de la plaque (15) logée en étant déplaçable est conçue en étant cannelée.

8. Batterie de véhicule automobile selon l'une quelconque des revendications précédentes, **caractérisée**
a) **en ce que** le logement (18) comprend un fixe-câble (14) destiné à fixer une ligne de signaux du capteur de température et/ou
b) **en ce que** dans la direction (A), vers les cellules de batterie (2) voisines, le logement (18) est délimité chaque fois par un élément de paroi et en ce que sur la face opposée au pôle, le logement est délimité par un élément de paroi (14) enfichable.

9. Batterie de véhicule automobile selon l'une quelconque des revendications précédentes, **caractérisée par** un capteur de température (20) fixé dans le logement (18) qui est enveloppé d'une matière antichoc.

10. Batterie de véhicule automobile selon la revendication 9, **caractérisée en ce que** la matière antichoc est une mousse synthétique.

11. Batterie de véhicule automobile selon l'une quelconque des revendications précédentes, **caractérisée en ce que** le couvercle de boîtier (5) comporte au moins un système d'introduction supplémentaire, destiné à introduire au moins un capteur de température supplémentaire, à l'aide duquel la température d'une cellule de batterie peut être détectée, au-dessus duquel l'au moins un capteur de température supplémentaire peut être placé sur un point de mesure supplémentaire, situé en-dessous du couvercle de boîtier, dans la région du pôle d'une cellule.

12. Batterie de véhicule automobile selon la revendication 11, **caractérisée en ce que** l'un de l'au moins un système d'introduction supplémentaire est placé dans une région du couvercle de boîtier qui recouvre une cellule de batterie extérieure du module batterie, de telle sorte qu'un capteur de température supplémentaire puisse être placé sur un point de mesure situé en-dessous du couvercle de boîtier, dans la région du pôle d'une cellule extérieure.

13. Véhicule automobile, de préférence véhicule utilitaire, doté d'une batterie de véhicule automobile (1) selon l'une quelconque des revendications 1 à 12.
